Europäisches Patentamt

European Patent Office

Office européen des brevets

(11) Veröffentlichungsnummer: **0 452 633 A1**

# (12) EUROPÄISCHE PATENTANMELDUNG

(21) Anmeldenummer: 91102690.4

(22) Anmeldetag: 23.02.91

(51) Int. Cl.5: **F16C 13/00**, F16C 32/06

(30) Priorität: 19.04.90 DE 4012439

(43) Veröffentlichungstag der Anmeldung:
23.10.91 Patentblatt 91/43

(84) Benannte Vertragsstaaten:
CH DE FR GB IT LI SE

(71) Anmelder: Eduard Küsters Maschinenfabrik
GmbH & Co. KG
Gladbacher Strasse 457
W-4150 Krefeld 1(DE)

(72) Erfinder: Küsters, Karl-Heinz
Herm.-Schumacher-Strasse 49
W-4150 Krefeld(DE)
Erfinder: Schrörs, Günter
Corneliusstrasse 29
W-4154 Tönisvorst 1(DE)

(74) Vertreter: Palgen, Peter, Dr. Dipl.-Phys.
Patentanwälte Dipl.-Phys. Dr. Peter Palgen &
Dipl.-Phys. Dr. H. Schumacher
Mulvanystrasse 2
W-4000 Düsseldorf(DE)

(54) Stützelement und damit ausgerüstete Walze.

(57) Eine Walze mit steuerbarem Liniendruck umfaßt eine umlaufende Hohlwalze, und eine diese der Länge nach durchgreifendes undrehbares Querhaupt (3). In Zylindersackbohrungen (18) des Querhaupts (3) sind Stützelemente (14) verschiebbar. Unter den Stützelementen (14) sind Zylinderkammern (24) gebildet, die über Durchbrüche (23) mit an der Anlageseite der Stützelemente (14) ausgebildeten Lagertaschen (25) in Verbindung stehen. Außerdem sind außerhalb der Lagertaschen (25) Randtaschen (35) zur Stabilisierung des Stützelements (14) vorgesehen, die über einen Kanal (41) gespeist werden, der von dem jeweiligen Durchbruch (23) ausgeht und eine Drosselstelle (39) enthält.

FIG. 2

EP 0 452 633 A1

Die Erfindung bezieht sich auf ein Stützelement der dem Oberbegriff des Anspruchs 1 entsprechenden Art sowie eine damit ausgerüstete Walze.

Ein solches Stützelement und eine solche Walze sind aus der DE-OS 38 20 974 bekannt.

Bei Walzen dieser Art erfolgt die Anpressung des Stützelementes an den Innenumfang der Hohlwalze durch den in dem Zylinderraum der zusätzlichen Kolben/Zylindereinheit, die bis auf die Zuleitung geschlossen ist, herrschenden hydrostatischen Druck. Danach richtet sich der Druck in der oder den Lagertaschen des jeweiligen Stützelements und die von diesem ausgeübte Kraft bzw. sein Beitrag zur Linienkraft in dem Walzspalt.

Bei der bekannten Ausführungsform werden nun die Randtaschen aus dem Zylinderraum der Kolben/Zylindereinheit versorgt. Die Randtaschen dienen der Stabilisierung des Stützelements, zur Vermeidung der Ausbildung eines ungleichmäßigen Spalts an der Berandung der Lagertaschen, was die Ausbildung eines entsprechend ungleichmäßigen Flüssigkeitsfilms auf dieser Berandung zur Folge hätte. Die Randtaschen kommen durch die Drosselung ihrer Zuleitungskanäle stets von selbst in ein Gleichgewicht und richten dabei das ganze Stützelement optimal zum Innenumfang der Hohlwalze aus.

Durch die Speisung der Randtaschen bei der bekannten Ausführungsform aus dem Zylinderraum der Kolben/Zylindereinheit entsteht dort ein ständiger geringfügiger Druckflüssigkeitsverlust, der zur Aufrechterhaltung des vorgeschriebenen Druckes ausgeglichen werden muß. Dadurch ist die Drucksteuerung in dem Zylinderraum erschwert. Insbesondere aber ist es nachteilig, daß die an den Randtaschen austretende Druckflüssigkeit in ihrer Menge druckabhängig ist, so daß bei einer Beheizung der Walze über die Druckflüssigkeit mit den variierenden Mengen der Randtaschen auch unterschiedliche Mengen an Wärme auf den Innenumfang der Hohlwalze übertragen werden. Dadurch ändert sich bei einer Änderung des Linienkraftprofils das Temperaturprofil gezwungenermaßen in schwer überschaubarer Weise ebenfalls.

Der Erfindung liegt die Aufgabe zugrunde, ein Stützelement bzw. eine Walze der den Oberbegriffen der Ansprüche 1 bzw. 2 entsprechenden Art so auszugestalten, daß die Steuerung der von dem Stützelement ausgeübten Kraft vereinfacht und die Einstellung des Temperaturprofils von dem Linienkraftprofil entkoppelt wird.

Diese Aufgabe wird durch die in den Ansprüchen 1 bis 2 wiedergegebene Erfindung gelöst.

Durch die erfindungsgemäße Ausbildung können die Lagertaschen und die Randtaschen an eine gemeinsame Druckflüssigkeitsquelle mit konstantem Volumenstrom angeschlossen werden. Der Zylinderraum der Kolben/Zylindereinheit kann bis auf die Zuleitung tatsächlich geschlossen bleiben und somit als echtes hydrostatisches Druckelement wirken. Mit dem Innenumfang der Hohlwalze kommt nur die konstante Druckflüssigkeitsmenge in Berührung, die aus der Zylinderkammer übertritt. Der Druck in dieser Zylinderkammer bzw. den Lagertaschen und auch den Randtaschen stellt sich in Abhängigkeit von dem in dem Zylinderraum vorhandenen Druck selbsttätig ein. Die Menge bleibt aber davon unbeeinflußt, und es wird somit auch bei einem sich ändernden Linienkraftprofil das Temperaturprofil aufrechterhalten.

In der Zeichnung ist ein Ausführungsbeispiel der Erfindung schematisch dargestellt.

Fig. 1 zeigt eine Ansicht einer Walzenanordnung, bei der die Unterwalze mit den erfindungsgemäßen Stützelementen ausgerüstet ist;

Fig. 2 zeigt einen Schnitt durch ein einzelnes Stützelement nach der Linie II-II in Fig. 3;

Fig. 3 zeigt eine Ansicht auf das Stützelement gemäß Fig. 2 von oben.

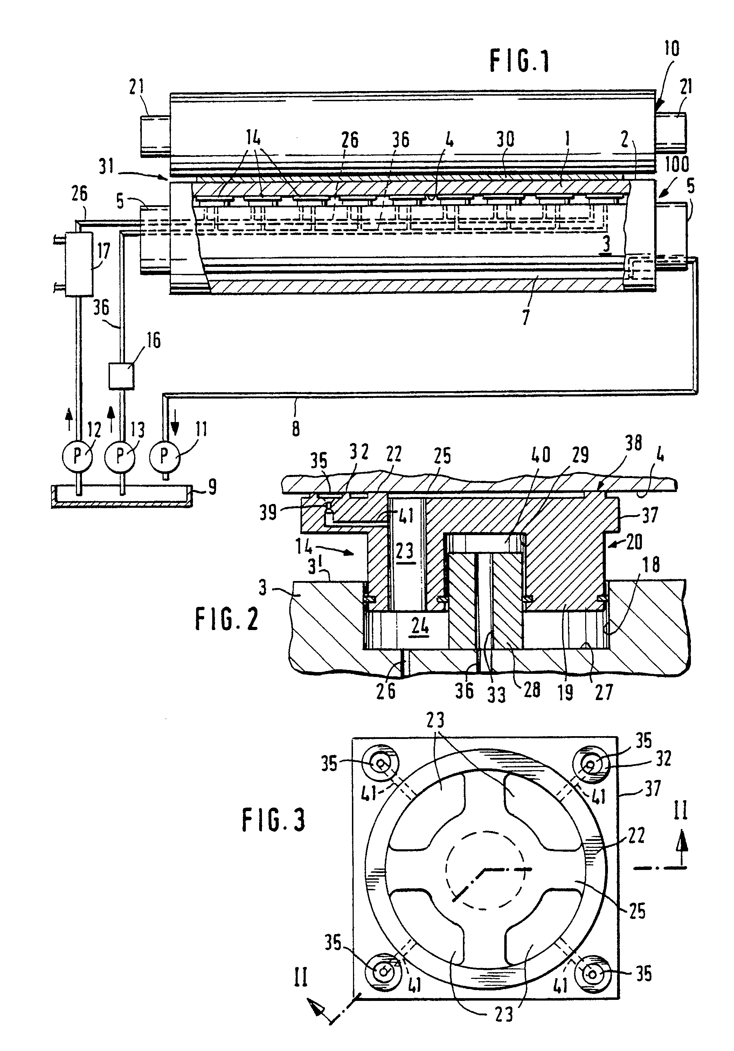

Die in Fig. 1 dargestellte Walzenanordnung umfaßt eine Oberwalze 10 und eine Unterwalze 100, zwischen denen eine Warenbahn 30 einer Druckbehandlung in dem Walzspalt 31 ausgesetzt wird. Die Oberwalze 10 ist eine konventionelle massive Walze. Die Unterwalze 100 hingegen umfaßt eine umlaufende Hohlwalze 1, deren Außenumfang 2 den arbeitenden Walzenumfang bildet und die der Länge nach von einem undrehbaren Querhaupt 3 durchgriffen ist, welches allseitig Abstand zum Innenumfang 4 der Hohlwalze 1 beläßt, so daß es sich innerhalb der Hohlwalze 1 durchbiegen kann, ohne mit dem Innenumfang 4 in Berührung zu kommen.

Die Zapfen 21 der Oberwalze 10 sowie die aus der Hohlwalze 1 an den Enden hervorstehenden Enden 5 des Querhauptes 3 sind in einem nicht dargestellten Walzenständer geführt und werden durch geeignete Belastungsvorrichtungen gegeneinander gedrückt.

Die Hohlwalze 1 kann an ihren Enden auf dem Querhaupt 3 durch in Fig. 1 nicht dargestellte Lager drehbar gelagert sein. Bei einem alternativen Ausführungsbeispiel ist die Hohlwalze 1 an dem Querhaupt 3 in der Wirkebene, d.h. in der gemäß Fig. 1 parallel zur Zeichenebene gelegenen Verbindungsebene der Achsen der beiden Walzen 10 und 100, verschiebbar geführt und kann sich als Ganzes gegenüber dem Querhaupt 3 in einem gewissen Bereich verlagern.

An der Oberseite des Querhauptes 3, d.h. also auf der dem Walzspalt 31 zugewandten Seite, sind hintereinander Stützelemente 14 vorgesehen, von denen in dem dargestellten Ausführungsbeispiel neun vorhanden sind und denen über in dem Querhaupt 3 ausgebildete Zuleitungen 26, 36 Druckflüssigkeit zugeleitet werden kann. Die Druckflüssigkeit preßt die Stützelemente 14 an den Innenumfang 4 der Hohlwalze 1 an und drückt diese zur Bildung der Linienkraft gegen den Walzspalt 31. Die Druckflüssigkeit tritt über innere Kanäle der Stützelemente 14 auf deren an dem Innenumfang 4 der Hohlwalze 1 anliegende Außenseite über, wo sich hydrostatische Lagertaschen befinden, die von einem ringsum geschlossen umlaufenden Rand umgeben sind, über den die Druckflüssigkeit abströmt, so daß ein tragfähiger Flüssigkeitsfilm gegeben ist, auf welchem die Hohlwalze 1 mit ihrem Innenumfang 4 beim Umlauf gleitet. Die an den Stützelementen 14 übertretende Flüssigkeit sammelt sich in dem Zwischenraum 7 zwischen dem Querhaupt 3 und dem Innenumfang 4 der Hohlwalze 1 und wird mittels einer Pumpe 11 über die Leitung 8 aus dem Zwischenraum 7 abgezogen und in dem Vorratsbehälter 9 zurückgeführt.

Die Zuleitungen 26,36 sind in Fig. 1 nur schematisch als einzelne Leitungen dargestellt. Zur Steuerung des in dem Walzspalt 31 herrschenden Linienkraftprofils können aber tatsächlich die einzelnen Stützelemente 14 individuell mit Druckflüssigkeit beaufschlagt werden. Zumindest aber erfolgt eine gruppenweise separate Beaufschlagung, beispielsweise einer mittleren Gruppe und zweier Randgruppen von Stützelementen 14.

Die Pumpe 12 liefert unabhängig vom Druck ein konstantes Druckflüssigkeitsvolumen, welches auf die Zuleitung 26 bzw. die Zuleitungen 26 gegen wird. In einem der Pumper 12 nachgeschalteten Wärmetauscher 17 wird die Druckflüssigkeit auf Temperatur gebracht, wobei auch die Temperatur der den einzelnen Stützelementen 14 zugeleiteten Druckflüssigkeit für jedes Stützelement einzeln oder für Gruppen von Stützelementen 14 separat eingestellt werden kann.

Die Pumpe 13 liefert Druckflüssigkeit unter vorbestimmten und durch die Regeleinrichtung 16 eingehaltenen Druck auf die Zuleitung 36 bzw. die Zuleitungen 36.

In den Fig. 2 und 3 ist die Ausbildung der Stützelemente 14 im einzelnen erkennbar. In der Oberseite 3' des Querhauptes 3 sind mehrere Sackbohrungen 18 eingebracht, deren Achse zur Achse der Hohlwalze 1 senkrecht steht und in der Wirkebene gelegen ist. In die Sackbohrungen 18 tauchen kolbenartige Stützglieder 20, die mit ihrer Oberseite 38 dem zylindrischen Innenumfang 4 der Hohlwalze 1 entsprechend geformt sind und an diesem anliegen. Die Sackbohrung 18 und das Stützglied 20 bilden zusammen das Stützelement 14.

Das Stützglied 20 umfaßt einen gemäß Fig. 2 unteren zylindrischen Stützteil 19, der in die Sackbohrung 18 eintaucht, sowie einen oberen Anlageteil 37, der im Grundriß, d.h. in der Achsrichtung des Unterteils 19 gesehenen Ansicht etwa quadratisch ist, wie aus Fig. 3 hervorgeht. Zwischen der Unterseite des Stützteils 19 und dem "Boden" der Sackbohrung 18 ist eine Zylinderkammer 24 gebildet. Auf der Oberseite des Anlageteils 37 ist eine als flache Vertiefung ausgebildete Lagertasche 25 vorgesehen, die ringsum von einer geschlossenen kreisförmigen Berandung 22 umgeben ist. Die im Grundriß kreisscheibenförmige Lagertasche 25 steht über vier über die Höhe des Stützgliedes 20 durchgehende Durchbrüche 23 mit der Zylinderkammer 24 in dem Querhaupt 3 in Verbindung. In diese Zylinderkammer 24 führt die von einem konstanten Volumenstrom gespeiste Zuleitung 26. Die Druckflüssigkeit tritt aus der Zylinderkammer 24 über die Durchbrüche 23 in die Lagertasche 25 über und strömt von dort über die Berandung 22 nach außen ab.

In den Ecken des Anlageteils 37 sind Randtaschen 35 angebracht, die von einer rundum geschlossenen Berandung 32 umgeben sind und ebenfalls einen kreisförmigen Grundriß haben. Die Außenseiten der Berandungen 32 liegen in der gleichen Zylinderfläche wie die Berandung 22, d.h. in der durch den Innenumfang 4 der Hohlwalze 1 gegebenen Zylinderfläche.

Die Anlagefläche 38 des Stützelements 14 ist also durch die Summe der Berandungen 22 und 32 gegeben.

Die Speisung der Randtaschen 35 erfolgt über von den Durchbrüchen 23 ausgehende Kanäle 41, in denen eine Drosselstelle mit einer Blende 39 enthalten ist. Ein geringer Anteil der Druckflüssigkeit in der Zylinderkammer 24 und den Durchbrüchen 23 tritt also über den Kanal 41 in die jeweilige Randtasche 35 über und strömt über deren Rand 32 nach außen ab. Durch die Drosselstelle mit der Blende 39 fällt bei einer Abstandsvergrößerung des Innenumfangs 4 gegenüber der Berandung 32 der Druck in der Randtasche 35 praktisch schlagartig ab, so daß sich der Abstand wieder verringert. Durch die durch den Kanal 41 nachgelieferte Druckflüssigkeit steigt der Druck sogleich wieder an. Es bildet sich ein Gleichgewichtsabstand aus. Dies gilt für alle vier Randtaschen 35. Diese sind zu der Lagertasche 25 symmetrisch verteilt und halten deren Berandung 22 in einem wohl definierten Abstand zum Innenumfang 4 der Hohlwalze 1.

Auf dem Boden 27 der Zylinderkammer 24 ist konzentrisch ein Kolben 28 angeordnet, der von unten in eine Sackbohrung 29 des Dichtungsgliedes 20 eingreift. Zwischen der Oberseite des Kolbens 28 und dem "Boden" der Sackbohrung 29 ist ein Zylinderraum 40 gebildet, dem über einen Kanal 33 im Innern des Kolbens 28 Druckflüssigkeit zugeführt werden kann. Der Kanal 33 ist an die Zuleitung 36 angeschlossen.

Wenn mittels der Pumpe 13 in dem Zylinderraum 40 ein bestimmter hydrostatischer Druck erzeugt wird, wird das Dichtungsglied 20 mit einer bestimmten Kraft gegen den Innenumfang 4 der Hohlwalze 1 angedrückt. Die über die Zuleitung 26 der Lagertasche 25 und den Randtaschen 35 mit konstantem Volumenstrom zugeführte Druckflüssigkeit paßt sich in ihrem Druck selbsttätig an, wobei die Höhe dieses Drucks von der in dem Zylinderraum 40 ausgeübten Kraft abhängt. Damit die Kraft bzw. der Druck in dem Zylinderraum 40 ein möglichst unverfälschtes Maß für die von dem Stützelement 14 ausgeübte Kraft ist, sind die Wirkflächen des Drucks in der Lagertasche 25 und den Randtaschen 35 einerseits und des Drucks in der Zylinderkammer 24 andererseits gleich groß. Unter dem Druck der durch die Zuleitung 26 herangeführten Druckflüssigkeit ist das Stützglied 20 also kräftefrei. Die Anpreßkraft wird ausschließlich durch den Druck in dem Zylinderraum 40 erbracht.

## Patentansprüche

1. Stützelement für eine Walze mit steuerbarem Liniendruck,

   mit einer den arbeitenden Walzenumfang bildenden umlaufenden Hohlwalze,

   mit einem die Hohlwalze der Länge nach durchgreifenden, rundum Abstand vom Innenumfang der Hohlwalze belassenden undrehbaren Querhaupt,

   und mit über die Länge der Hohlwalze verteilt in radialen Zylinderkammern angeordneten kolbenartigen Stützelementen, die

   eine dem Innenumfang der Hohlwalze in der Form angepaßte Anlagefläche, die eine eine gegen den Innenumfang der Hohlwalze offene hydrostatische Lagertasche ringsum geschlossen umgrenzende Berandung umfaßt,

   außerhalb der Berandung mindestens zwei weitere gegen den Innenumfang der Hohlwalze offene, von der Lagertasche getrennte Randtaschen

   und voneinander getrennte Kanäle zur Versorgung der Lagertasche und der Randtaschen mit Druckflüssigkeit aufweisen, von denen der zu der Lagertasche führende Kanal drosselfrei und die zu den Randtaschen führenden Kanäle drosselnd ausgeführt sind,

   dadurch gekennzeichnet,

   daß die zu den Randtaschen (35) führenden Kanäle (41) mit der Zylinderkammer (24) in Verbindung stehen.

2. Walze mit steuerbarem Liniendruck,

   mit einer den arbeitenden Walzenumfang bildenden umlaufenden Hohlwalze,

   mit einem die Hohlwalze der Länge nach durchgreifenden, rundum Abstand vom Innenumfang der Hohlwalze belassenden undrehbaren Querhaupt,

   mit über die Länge der Hohlwalze verteilt in radialen Zylinderkammern angeordneten kolbenartigen Stützelementen, die

   eine dem Innenumfang der Hohlwalze in der Form angepaßte Anlagefläche, die eine eine gegen den Innenumfang der Hohlwalze offene hydrostatische Lagertasche ringsum geschlossen umgrenzende Berandung umfaßt,

   außerhalb der Berandung mindestens zwei weitere gegen den Innenumfang der Hohlwalze offene, von der Lagertasche getrennte Randtaschen

   und voneinander getrennte Kanäle zur Versorgung der Lagertasche und der Randtaschen mit Druckflüssigkeit aufweisen, von denen der zu der Lagertasche führende Kanal drosselfrei und die zu den Randtaschen führenden Kanäle drosselnd ausgeführt sind,

   und mit mindestens zwei in dem Querhaupt ausgebildeten getrennten Zuleitungen zu den Kanälen, von denen eine in die Zylinderkammer mündet und die andere mit dem Zylinderraum einer zur Achse der Zylinderkammer parallelen, jedoch einen wesentlich kleineren Querschnitt aufweisenden Kolben/Zylindereinheit in Verbindung steht, von der ein Teil am Boden der Zylinderkammer, der andere Teil am Stützglied des Stützelements ausgebildet ist,

   dadurch gekennzeichnet,

   daß die zu den Randtaschen (35) führenden Kanäle (41) mit der Zylinderkammer (24) in Verbindung stehen und die Zylinderkammer (24) von einer Pumpe (12) mit konstantem Volumenstrom hydraulischer Flüssigkeit gespeist ist.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 064 607   (WOLF) <br> * Spalte 3, Zeilen 14-19; Figur 1 * <br> — — — | 1,2 | F 16 C 13/00 <br> F 16 C 32/06 |
| Y | EP-A-0 338 236   (KÜSTERS) <br> * Spalte 6, Zeilen 17-25; Spalten 7-8; Figuren 2,4 * <br> — — — | 1,2 | |
| A | DE-A-3 011 669   (VOITH) <br> * Seite 9; Figuren * <br> — — — | 1 | |
| A | DE-A-2 634 821   (ESCHER WYSS) <br> * Seite 6; Figur 2 * <br> — — — | 1 | |
| A | FR-A-2 108 422   (SKF) <br> * Seite 2, Zeilen 31-36; Figuren 3-4 * <br> — — — | 1 | |
| A | WO-A-8 902 038   (SULZER-ESCHER WYSS) <br> * Patentansprüche 7-10; Figuren * <br> — — — | 1,2 | |
| A | EP-A-0 340 515   (SULZER-ESCHER WYSS) <br> * Das ganze Dokument * <br> — — — — — | 1,2 | |

RECHERCHIERTE SACHGEBIETE (Int. Cl.5)

F 16 C

Der vorliegende Recherchenbericht wurde für alle Patentansprüche erstellt

| Recherchenort | Abschlußdatum der Recherche | Prüfer |
|---|---|---|
| Den Haag | 24 Juni 91 | ORTHLIEB CH.E. |